# EUROPÄISCHE PATENTSCHRIFT

(11) **EP 0 487 988 B1**
(45) Veröffentlichungstag und Bekanntmachung des Hinweises auf die Patenterteilung: **19.05.1999**
(21) Anmeldenummer: 91119465.2
(22) Anmeldetag: 14.11.1991
(51) Int. Cl.: C08B 11/193

(54) **Wasserlösliche Hydroxypropyl-Sulfoethyl-Cellulosederivate (HPSEC) mit niedrigem Substitutionsgrad und Verfahren zu ihrer Herstellung**
Low substituted water-soluble hydroxypropyl-sulfoethylcellulose derivatives (HPSEC) and process to produce the same
Dérivés hydroxypropyl-sulfoéthylcellulose (HPSEC) solubles dans l'eau,possédant un faible degré de substitution et leur procédé de préparation

(30) Priorität: 27.11.1990 DE 4037605
(43) Veröffentlichungstag der Anmeldung: 03.06.1992
(73) Patentinhaber: Wolff Walsrode Aktiengesellschaft, D-29655 Walsrode (DE)
(72) Erfinder: Kiesewetter, René, Dr., W-3040 Soltau-Ahlften (DE); Szablikowski, Klaus, Dr., W-3030 Walsrode (DE)
(74) Vertreter: Hellfeldt, Kurt, Dr.

(56) Entgegenhaltungen:
- EP-A- 0 319 867
- US-A- 3 357 971
- CELLULOSE CHEMISTRY AND TECHNOLOGY Bd. 4, Nr. 4, 1970, RO Seiten 389 - 398; J. PASTYR ET M. PASTEKA: 'Synthesis of hydroxyethylsulfoethyl cellulose and determination of its solubility'

## Beschreibung

Die Erfindung betrifft ionische, wasserlösliche Hydroxypropyl-Sulfoethyl-Cellulosederivate und ein Verfahren zu ihrer Herstellung.

Wasserlöslische Celluloseether besitzen ein breites Anwendungsspektrum. Verwiesen sei in diesem Zusammenhang auf das Kapitel Celluloseether in Ullmanns Enzyklopädie der technischen Chemie, Band 9, Seite 192 - 212 (Verlag Chemie, Weinheim, 1975).

Für ein ökonomisches und effizientes Verfahren zur Herstellung von Celluloseethern ist neben einer hohen Ausbeute an Reagenz und einer guten Lösungsqualität ein möglichst geringer Einsatz von Veretherungsmitteln wünschenswert.

In der Offenlegungsschrift DE-OS 37 42 104 wird ein Verfahren zur Herstellung einer Sulfoethylcellulose (SEC) mit hervorragenden Lösungsqualitäten beschrieben und deren Umsetzung mit in der Cellulosechemie üblichen Reagenzien, wie z.B. Chloressigsäure, Ethylenoxid, Propylenoxid, Methyl- bzw. Ethylchlorid, beispielhaft erwähnt. Die Viskosität der Lösungen wird mit 15 -60.000 mPa.s (gemessen in 2 gew.-%iger wäßriger Lösung bei einem Schergefälle von D = 2,5 sec⁻¹ bei 20°C) angegeben. Die Ausbeute bezüglich des Sulfoalkylierungsmittels VSSNa (Natriumsalz der Vinylsulfonsäure) liegt lediglich bei 48-56 %. Angaben zur Ausbeute bezüglich Propylenoxid (PO) werden nicht gemacht. Der durchschnittliche Substitutionsgrad (DS) bezüglich Sulfoethyl wird mit 0,4 - 1,4 angegeben, liegt damit also in einem Bereich, in dem bereits eine sehr gute Wasserlöslichkeit besteht.

In der US-PS 3 357 971 wird ein Verfahren zur Herstellung gemischter, in kaltem Wasser löslicher, ionischer, thermoplastischer Cellulosemischether beschrieben. Als nicht ionischer Substituent wirkt hierbei die Hydroxypropylgruppe. Als Zweitsubstituenten fungieren Carboxy-, Dialkylamino- und Sulfoalkylierungsgruppen bzw. Sulfatierungsgruppen. Der molekulare Substitionsgrad (MS) bezüglich Hydroxypropyl wird mit > 2, insbesondere aber 4, angegeben. Der durchschnittliche Substitionsgrad (DS) des ionischen Substituenten liegt zwischen 0,001 und 0,4. Die in den Beispielen erwahnten Synthesen zur Darstellung einer wasserlöslichen Hydroxypropyl-Sulfoethyl-Cellulose (HPSEC) verlaufen mit Ausbeuten bezüglich Vinylsulfonsäurenatriumsalz (bzw. Natrium-2-chlorethansulfonat) von 18,7 % (bzw. 11,4 %). Die Ausbeute bezüglich des stark cancerogenen Propansultons bei der Darstellung einer Hydroxypropyl-Sulfopropyl-Cellulose (HPSPC) wird mit 21,7 % angegeben. Angaben zur Ausbeute an Propylenoxid (PO) werden nicht gemacht.

Die Viskositat der Lösungen der in den Beispielen erwahnten Hydroxypropyl-Sulfoalkyl-Cellulosederivate liegt aufgrund der Reaktionsbedingungen (16 stündige Reaktion; Aufarbeitung im sauren Milieu) lediglich bei 570 bzw. 2.000 mPa.s (gemessen in 2 gew.-%iger wäßriger Lösung, bei einem Schergefälle von D = 2,5 sec⁻¹ bei 20°C).

Bei den in EP-01 61 607, EP-01 26 959, EP-00 80 678 und DE-A 33 06 621 beschriebenen wasserlöslichen Cellulosemischethern werden u.a. ionische Hydroxyalkyl-Cellulosemischether mit Carboxyalkyl-, Sulfonoalkyl-, Phosphonalkyl- sowie N,N-Dialkylaminoalkylgruppen beschrieben. Die in ihrer Viskosität, ihrem Substitutionsgrad und ihrer Ausbeute nicht näher bezeichneten Produkte werden entweder in Dimethylether bzw. Dimethoxyethan allein oder im Gemisch mit Alkanolen, Alkandiolen und/oder Alkoxyalkanolen hergestellt.

FR-23 06 215 beschreibt ein Verfahren zur Herstellung von wasserlöslichen, ionischen Hydroxypropyl-Cellulosemischethern mit thermischen Flockpunkten, also Substitutionsgraden mit Hydroxypropyl von etwa 4. Hierbei wird Monochloressigsäure (bzw. Natriummonochloracetat) oder das stark cancerogene Propansulton als Alkylierungsmittel eingesetzt.

Der vorliegenden Erfindung lag die Aufgabe zugrunde, wasserlösliche hydroxypropylsulfoethylierte Cellulosederivate (HPSEC) mit hohen Ausbeuten und geringer Einsatzmenge an Veretherungsmittel in allen Viskositätsbereichen bereitzustellen und hierfür ein effizientes und wirtschaftliches Herstellungsverfahren aufzuzeigen.

Bekanntlich ist zur Herstellung einer wasserlöslischen Sulfoalkylcellulose ein durchschnittlicher Substitutionsgrad (DS) mit Sulfoalkyl von etwa 0,3 notwendig (siehe u.a. K. Engelskirchen, in Houben-Weyl's, "Makromolekulare Stoffe", Band E 20/III, S. 2.083, Herausgeber A. Barth u. J. Falbe, Georg Thieme Verlag, Stuttgart/New York, 1987 und N.N. Shorygina, Z.I. Kuznetsova, V.S. Arkhipova, V. M. Prostyakova, Vysokomol. Soedin Ser. B 10, 438 (1968); C. A. 69, 53003 (1968)). Für die Darstellung einer in Wasser löslichen Hydroxypropylcellulose ist ein molekularer Substitutionsgrad (MS) mit Hydroxypropyl von etwa 4 erforderlich (siehe A. P. Savage, in N.M. Bikales und L. Segal, High Polymers, Vol. V Cellulose and Cellulose Derivatives, Part V, S. 806, Wiley-Interscience, New York/London/Sydney/Toronto, 1971).

Überraschenderweise wurde nun gefunden, daß Hydroxypropyl-Sulfoethyl-Cellulosemischether bereits bei Substitutionsgraden gut wasserlöslich sind, bei denen die reinen Celluloseether (SEC bzw. HPC) noch keine Wasserlöslichkeit zeigen.

Gegenstand der Erfindung sind wasserlösliche Hydroxypropyl-Sulfoethyl-Cellulose (HPSEC)-Derivate mit einem durchschnittlichen Substitutionsgrad (DS) mit Sulfoethyl von < 0,3, insbesondere < 0,2, einem molaren Substitutionsgrad (MS) mit Hydroxypropyl von < 2, insbesondere < 1,95, und einer Viskosität von 5-80.000 mPa.s, insbesondere 3.000-50.000 mPa.s (gemessen in 2 gew.-%iger wäßriger Lösung bei einem Schergefälle von D = 2,5 sec⁻¹ bei 20°C). Die erfindungsgemäßen Hydroxypropyl-Sulfoethylcellulosen zeichnen sich durch gute Wasserlöslichkeit aus, d.h. die Produkte besitzen einen durch Abzentrifugieren (20 Minuten bei 2.500 G) ermittelten, geringen unlöslichen Anteil, der bei 5 % oder niedriger liegt.

Die Synthese von wasserlöslischen Celluloseethern mit einheitlichen bzw. verschiedenen Arten von Substituenten ist in der Literatur bekannt. Durch gleichzeitige oder stufenweise Reaktionsführung können Cellulosemischether hergestellt werden. Je nach Einsatz des Veretherungsmittels können die ein- oder mehrstufig durchgeführten Reaktionen unter vollständigem Alkaliverbrauch oder unter Anwesenheit katalytischer Mengen einer Base erfolgen.

Das erfindungsgemäße Verfahren zur Herstellung von wasserlöslichen Hydroxypropyl-Sulfoethyl-Cellulosederivaten (HPSEC) wird bevorzugt in einem zylindrischen Reaktionsgefäß durchgeführt, das mit einem geeigneten Rühraggregat versehen ist, welches eine ausreichende Durchmischung der heterogenen Reaktionsmasse gewährleistet. Das Reaktionsgefäß ist vorzugsweise geschlossen, um eine Reaktionsführung unter Stickstoffatmosphäre zu ermöglichen. Eine ausreichende Möglichkeit zur Temperierung des Gefäßes ist vorzugsweise ebenfalls vorhanden.

Das Verfahren gliedert sich in folgende Reaktionsschritte:
a) Bildung einer Alkalicellulose durch Umsetzung von Cellulose mit Alkali oder Alkali-Ammoniak-Gemischen,
b) Veretherung der Alkalicellulose in Anwesenheit einer Base mit mindestens einem Veretherungsmittel (Sulfoethylierungsmittel und/oder Hydroxypropylgruppen übertragende Verbindung), das eine mindestens katalytische Menge einer Base benötigt,
c) gegebenenfalls weitere Veretherung mit mindestens einem Veretherungsmittel (Hydroxypropylgruppen übertragende Verbindung, Sulfoethylierungsmittel).

Als Hydroxypropylgruppen übertragende Verbindung wird bevorzugt Propylenoxid (PO) eingesetzt. Als Sulfonoalkylveretherungsmittel wird Halogenethan- bzw. Vinylsulfonsäure, insbesondere Vinylsulfonsäure-Natriumsalz, eingesetzt. Zusätzlich kann die HPSEC mit weiteren Veretherungsmitteln, wie z.B. Epoxiden (z.B. Butylenoxid, Styroloxid, Glycidol), Alkyl- bzw. Aralkylhalogeniden (z.B. Methyl- bzw. Benzylchlorid) und/oder 3-Alkoxy-2-hydroxypropylgruppen übertragenden Reagenzien (z.B. Isopropylglycidether) umgesetzt werden.

Als Ausgangsmaterial für das erfindungsgemäße Verfahren werden gemahlene Cellulosen, insbesondere Linters, Nadelholzsulfit-, Nadelholzsulfat- oder Laubholzzellstoffe, verwendet.

Die Viskositätsstufen der Produkte lassen sich durch Ausschluß oder Zugabe von oxidierenden Substanzen, wie z.B. Luft, H₂O₂ und Metalloxide und die Auswahl der eingesetzten Zellstoffe, die unterschiedliche Durchschnittspolymerisationsgrade aufweisen, einstellen.

Die Alkalisierung der Cellulose erfolgt in der Regel mit einem Alkalimetallhydroxid, insbesondere NaOH, das in fester oder gelöster Form (als wäßrige Alkalimetallhydroxidlösung beispielsweise in 15-50 gew.-%iger Form) eingesetzt wird, wobei die eingegebene Menge an Alkali die Menge von 1,8 mol Natriumhydroxyd pro Mol Cellulose nicht übersteigen soll.

Die Alkalisierung der Cellulose kann ohne oder, sofern es auf einen extrem niedrigen Fasergehalt ankommt, mit Ammoniak (Temperatur von -33 bis -60°C) in Anwesenheit von organischen Lösungsmitteln vorgenommen werden. Die Aktivierung mit Ammoniak bei tiefen Temperaturen ist in der Literatur bekannt und benötigt deshalb keine ausführliche Beschreibung (siehe z.B. EP-01 08 991).

Um zu gleichmäßig veretherten Produkten zu gelangen und lokale Überhitzungen zu vermeiden, wird die Alkalisierung der Cellulose und die nachfolende, mit mindestens einem Veretherungsmittel vorgenommene Alkylierung, bevorzugt in Anwesenheit von organischen Lösemitteln vorgenommen. Als Suspensionsmittel werden aromatische und/oder aliphatische Kohlenwasserstoffe, Ketone, Sulfoxide, cyclische Ether oder niedere Alkohole mit vorzugsweise 2 - 5 Kohelenstoffatomen pro Molekül, sowie Gemische dieser Lösungsmittel eingesetzt. Insbesondere werden nach dem erfindungsgemäßen Verfahren Isopropanol und 2-Methyl-propan-2-ol (tertiär-Butanol) bzw. Mischungen hieraus verwendet (0,5 - 20fache Gewichtsmenge der Cellulose).

Für die Veretherung wird die Cellulose mit Natronlauge versetzt, wobei ihre Konzentration 15 - 100 Gew.-% betragen soll. Die Zugabe von mindestens einem der Veretherungsmittel erfolgt entweder vor der Natriumhydroxydzugabe oder nach der Alkalisierungsphase. Das Verhältnis von Alkali zu Cellulose in der ersten Stufe der Reaktion beträgt 0,2 bis 1,8 : 1 (insbesondere 0,5 - 1,5 : 1).

Das Verhältnis von Wasser zu Cellulose beträgt 2 - 20 : 1 (insbesondere 4 bis 18 : 1). Nach dem erfindungsgemäßen Verfahren wird vor der Umsetzung mit mindestens einem der beiden Veretherungsmittel, auf jeden Fall jedoch nach der ersten Veretherungsstufe, der Alkaligehalt durch Auswaschen mit einem geeigneten, bekannten Lösungsmittel (z. B. Wasser oder Alkohol-Wassergemische) oder durch Neutralisation mit einer anorganischen oder organischen Säure auf 0,3 - 1,5 insbesondere 0,5 - 0,8 mol Natronlauge pro Mol Cellulose abgesenkt und anschließend mit dem zweiten Veretherungsmittel mit oder ohne inertem Verdünnungsmittel umgesetzt.

Die Veretherungsmittel Propylenoxid und Vinylsulfonsäurenatriumsalz können zusammen eingegeben werden und zunächst bei 10 - 60°C und anschließend bei 40 - 120°C und 0,5 - 6 Stunden Reaktionszeit mit der Alkalicellulose reagieren. Ebenso kann Vinylsulfonsäurenatriumsalz mit oder ohne organische Lösungsmittel zuerst mit der Alkalicellulose umgesetzt werden, wobei die Mischveretherung mit bzw. ohne eine Reinigung bzw. Neutralisation der in der ersten Stufe hergestellten SEC erfolgen kann. Insbesondere wird der Gehalt an Alkali nach der ersten Veretherungsstufe abgesenkt und noch vorhandene Natronlauge vorteilhaft für die zweite Veretherungsstufe eingesetzt. Die weitere Umsetzung mit PO wird in Gegenwart oder in Abwesenheit von organischen Lösemitteln bei Temperaturen von zunächst 10 - 60°C und später von 40 - 120°C und 0,5 - 6 Stunden Reaktionszeit ausgeführt. Umgekehrt kann die Veretherung auch so vorgenommen werden, daß in der ersten Veretherungsstufe die Umsetzung mit PO erfolgt und nachfolgend das Vinylsulfonsäurenatriumsalz bei 55 - 100°C ohne, vorzugsweise mit inerten organischen Lösungsmitteln, insbesondere Isopropanol, umgesetzt wird. Ferner ist die Reaktion von Vinylsulfonsäurenatriumsalz und 10 - 80 % einer bestimmten Menge an Propylenoxid in Gegenwart von Cellulose, Alkali, Wasser mit bzw. ohne organischem Lösungsmittel möglich. Nach gegebenenfalls vorgenommener vollständiger oder teilweiser Neutralisation bzw. Auswaschen des größten Teils der Lauge, kann die Veretherung mit 90 - 20 % der Menge an PO bei vorzugsweise geringerem Alkaligehalt durchgeführt werden.

Die nach dem erfindungsgemäßen Verfahren vorgenommene Synthese einer HPSEC kann aber auch mit zusätzlichen Veretherungsmitteln erfolgen. So kann über eine ein- bzw. mehrstufige Reaktionsführung eine Umsetzung mit Epoxiden, Alkyl- bzw. Aralkylhalogeniden und/oder 3-Alkoxy-2-hydroxypropylgruppen übertragenden Reagenzien vorgenommen werden. Die Reihenfolge der Zugabe der Reagenzien ist dabei für die Herstellung des Celluloseethers nicht entscheidend.

Das so erhaltene Produkt wird ggf. vom Slurry-Medium abgetrennt (Abzentrifugieren oder Filtration) und durch Waschen mit Alkoholen, Alkohol-Wassergemischen, Ketonen bzw. Keton-Wassergemischen von anhaftenden Salzen befreit. Die Reinigung kann, wenn es sich bei der Veretherung um einen Zweistufenprozeß handelt, nach der ersten Stufe mit organischen Lösemitteln, insbesondere jedoch mit Wasser, vorgenommen werden. Aufgrund der in der zweiten Stufe vorliegenden katalytischen Menge an Alkali ist es hier auch möglich, entweder das überschüssige Alkali durch geeignete wäßrige alkoholische Lösungsmittelgemische auszuwaschen und damit die Neutralisation zu umgehen oder bei einer Neutralisation die geringen Mengen an Salzen im Produkt zu belassen und damit auf eine Reinigung zu verzichten.

Die nach dem erfindungsgemäßen Verfahren herstellbaren Celluloseether können auf den bekannten Gebieten der Technik eingesetzt werden, also z.B. als Zusatzmittel auf dem Baustoffgebiet. Insbesondere wird die HPSEC dort eingesetzt, wo das Vorliegen eines gewissen Faseranteiles von hohem Nutzen ist (z.B. als Fliesenkleber). Ebenso eignet sich die HPSEC als Dispergier- und Suspendiermittel sowie als Hilfsmittel und Viskositätsbildner in wäßrigen Systemen, z.B. als Stabilisator, Dispergier- und Suspendiermittel bei Emulsions- und Suspensionspolymerisationen. Desgleichen ist die Verwendung als Verdicker und Stabilisator in tensidhaltigen Systemen, wie z.B. Reinigungsmitteln und Kosmetika, aber auch für Dispersionsfarben möglich.

Das erfindungsgemäße Verfahren bringt folgende Vorteile mit sich:
1. Durch eine ggf. der Veretherung vorgeschaltete Aktivierung in flüssigen Ammoniak bzw. durch die bevorzugte Verwendung von mit bereits katalytischen Mengen an Alkali reagierenden Veretherungsmitteln, ist für die Veretherung nur ein geringer Gehalt an Alkali notwendig. Dieser erfordert eine entsprechend niedrige Menge an für die Aufarbeitung ggf. erforderliche Menge an Neutralisationsmittel bzw. eine für die ggf. vorgenommene Auswaschung des Alkalis notwendige Menge an wäßrig organischen Lösungsmitteln.
   Die gegebenenfalls mit Wasser bzw. organischwäßrigen Lösungsmitteln ausgewaschene Menge an Alkali läßt sich leicht zurückgewinnen und kann für eine erneute Umsetzung wieder eingesetzt werden.
2. Durch den geringen Alkali- und Wassergehalt wird die Bildung von Nebenprodukten aus den Veretherungsmitteln erheblich reduziert, so daß weit weniger Veretherungsmittel für die Umsetzung erforderlich ist. Das erfindungsgemäße Verfahren führt dabei zu niedrig substituierten, wasserlöslichen Hydroxypropyl-Sulfoethyl-Cellulosen, deren wasserunlöslicher Anteil gering ist und bei 5 % oder niedriger liegt. Bei minimalem Chemikalienaufwand werden dabei hochwertige Produkte erhalten.
3. Durch den nach dem erfindungsgemäßen Verfahren im Endprodukt gegebenenfalls vorliegenden geringen Salzgehalt können die wasserlöslichen Produkte ohne zusätzliche Reinigung für bestimmte Anwendungsgebiete eingesetzt werden.
4. Sofern ein salzfreies Produkt gewünscht wird, lassen sich die nach dem erfindungsgemäßen Verfahren hergestellten Produkte mit geringem Aufwand reinigen.
5. Durch eine ggf. der Veretherung vorgeschaltete Aktivierung (Vorquellung) des Zellstoffs in flüssigem Ammoniak kommt es zu einer homogeneren Substitution entlang der Cellulosekette, was sich unter anderem in einer verbesserten Lösungsqualität und einer größeren Stabilität gegenüber enzymatischen Abbaureaktionen ausdrückt, so daß die so hergestellten niedrigsubstituierten Mischether auch in Bereichen einsetzbar sind, in denen es auf absolute Faserfreiheit und extrem gute Lösungsqualität ankommt (z.B. Kosmetik, Polymerisation, Dispersionsfarben).

Bei den erfindungsgemäßen Celluloseethern haben die Bezeichnungen DG (Degree of substitution) und MS (molarer Substitutionsgrad) die übliche Bedeutung:
Jede Anhydroglukoseeinheit der Cellulose besitzt drei Hydroxylgruppen.
DS: Durchschnittsanzahl der in der Cellulose substituierten Hydroxylgruppen pro Anhydroglukoseeinheit.
MS: Durchschnittsanzahl der Mole der mit der Cellulose kombinierten Reaktionspartner pro Anhydroglukoseeinheit.

Die in den folgenden Beispielen angegebenen Teile sind Gewichtsteile. Die Messung der Viskositäten erfolgte mit einem Rotationsviskosimeter Haake, Typ RV 100, System M 500, Meßeinrichtung MV, nach DIN 53 019, bei einer Schergeschwindigkeit von D = 2,5 sec⁻¹ und einer Temperatur von 20°C. Es wurden jeweils 2 gew.-%ige Lösungen in destillierten Wasser gemessen.

### Beispiel 1

87,1 Teile eines feingemahlenen Fichtensulfit-Zellstoffes werden in einem Druckreaktor mit einem wandgängigen Flügelrührer in 1.065,8 Teilen tertiär-Butanol suspendiert und der Reaktor mit Stickstoff gespült. 13,14 Teile einer 49,5 gew.-%igen wäßrigen vinylsulfonsäuren Natriumsalzlösung werden hinzugegeben. Die Mischung wird 15 Minuten lang gerührt. Dann werden 101,5 Teile Wasser und 59,9 Teile einer 50,1 gew.-%igen Natriumhyroxidlösung zugegeben. Nach Zugabe von 174,2 Teilen Propylenoxid (PO) wird 80 Minuten bei 25°C alkalisiert. Anschließend wird innerhalb von 60 Minuten auf 90°C erwärmt und diese Temperatur 120 Minuten lang gehalten. Mit einer äquimolaren Menge konzentrierter Essigsäure wird neutralisiert. Das Produkt wird abfiltriert und dreimal mit je 2.000 Teilen einer Mischung aus 8 Anteilen Aceton und 2 Anteilen Wasser und abschliessend noch mit 2.000 Teilen reinem Aceton gewaschen. Das Produkt wird an der Luft getrocknet. Die Produktherstelldaten sind Tabelle 1, die Produktdaten Tabelle 2 zu entnehmen.

### Beispiele 2 bis 5

Die Herstellung erfolgt wie in Beispiel 1 angegeben. Die Produktherstelldaten sind Tabelle 1 zu entnehmen, die Produktdaten gehen aus Tabelle 2 hervor.

### Beispiel 6 a

### Herstellung einer Sulfoethyl-Cellulose (SEC)

In einem mit einem geeigneten Rühraggregat versehenen zylindrischen Reaktionsgefäß, das in geeigneter Weise thermostatisierbar ist und in dem unter Stickstoffatmosphäre gearbeitet werden kann, werden 135,36 Teile Chemiezellstoff (Baumwoll-Linters) in 2.193 Teilen tertiär-Butanol suspendiert. Dazu gibt man 19,83 Teile einer 51,6 gew.-%igen Lösung vinylsulfonsaures Natrium und durchmischt 15 Minuten lang gründlich. Dann werden 193,2 Teile Wasser und 47,16 Teile Natriumhydroxyd zugegeben und 80 Minuten bei 25°C alkalisiert. Anschließend wird innerhalb von 1 Stunde auf 80°C erwärmt und diese Temperatur 120 Minuten lang gehalten. Der Ansatz wird durch Zugabe einer äquimolaren Menge konzentrierter Essigsäure neutralisiert, das Produkt abfiltriert und fünfmal mit je 2.000 Teilen einer Mischung aus 7 Anteilen Methanol und 3 Anteilen Wasser gewaschen und an der Luft getrocknet. Die erhaltene Sulfoethyl-Cellulose ist in Wasser unlöslich und wird für die weitere Umsetzung in einen Druckreaktor eingegeben.

### Beispiel 6 b

### Herstellung einer Hydroxypropyl-Sulfoethyl-Cellulose (HPSEC) aus einer Sulfoethyl-Cellulose (SEC).

88,5 Teile der in Beispiel 6 a hergestelten SEC werden in einem Druckreaktor mit einem wandgängigen Flügelrührer vorgelegt. Der Reaktor wird mit Stickstoff gespült.

52,92 Teile Wasser und 15,68 Teile Natriumhydroxydplätzchen (Prills) werden unter Rühren zum Celuloseether eingegeben. Die Mischung wird 30 Minuten bei 25°C gerührt. Unter ständigem Rühren werden 56,92 Teile Propylenoxid (PO) aufgedüst. Man erwärmt in 150 Minuten auf 80°C. Diese Temperatur wird unter ständigem Weiterrühren 10 Minuten lang gehalten. Nach Neutralisation mit einer äquimolaren Menge konzentrierter Essigsäure wird das Produkt abfiltriert und viermal mit je 2.000 Teilen einer Mischung aus 8 Teilen Aceton und 2 Teilen Wasser und anschließend noch mit 2.000 Teilen reinem Aceton gewaschen. Das Produkt wird an der Luft getrocknet. Die Produktherstelldaten sind Tabelle 1 zu entnehmen. Die Produktdaten sind in Tabelle 2 zusammengefaßt.

### Beispiel 7 a

### Herstellung einer Sulfoethyl-Cellulose (SEC)

In einem mit einem geeigneten Rühraggregat versehenen zylindrischen Reaktionsgefäß, das in geeigneter Weise thermostatisierbar ist, werden 138 Teile Chemiezellstoff (Baumwoll-Linters) in 2.177 Teilen tertiär-Butanol suspendiert. Dazu gibt man 103,3 Teile einer 30,23 gew.%igen Lösung vinylsulfonsaures Natrium und durchmischt 15 Minuten lang gründlich. Dann werden 150 Teile Wasser und 48 Teile Natriumhydroxyd zugegeben und 80 Minuten bei 25°C alkalisiert. Anschließend wird innerhalb von 30 Minuten auf 70°C erwärmt und diese Temperatur 150 Minuten lang gehalten. Der Ansatz wird durch Zugabe einer äquimolaren Menge konzentrierter Essigsäure neutralisiert, das Produkt abfiltriert und zweimal mit je 2.000 Teilen Wasser gewaschen und an der Luft getrocknet. Die erhaltene, in Wasser unlösliche Sulfoethyl-Cellulose wird für die weitere Umsetzung in einen Druckreaktor eingegeben.

### Beispiel 7 b

### Herstellung einer Hydroxypropyl-Sulfoethyl-Cellulose (HPSEC) aus einer Sulfoethyl-Cellulose (SEC)

Die im Beispiel 7 a dargestellte Sulfoethylcellulose wird in etwa 2.000 Teilen einer Mischung aus 8 Anteilen Aceton und 2 Anteilen Wasser eingegeben. Nach 12 Stunden wird der Celluloseether abfiltriert, mit etwa 2.000 Teilen reinem Isopropanol gewaschen. Für die weitere Umsetzung werden 229,89 Teile der isopropanolhaltigen SEC in einen Druckreaktor eingegeben. 56 Teile einer 22,8 gew. -%igen Natriumhydroxydlösung werden unter Rühren aufgedüst. Bei 25°C wird 30 Minuten lang alkalisiert. Unter ständigem Rühren werden 53,44 Teile Propylenoxid aufgedüst. Man erwärmt innerhalb von 60 Minuten auf 80°C und verethert 240 Minuten lang bei dieser Temperatur. Nach Neutralisation mit einer äpuimolaren Menge konzentrierter Essigsäure wird das Produkt abfiltriert, viermal mit je 2.000 Teilen einer Mischung aus 8 Teilen Aceton und 2 Teilen Wasser und anschließend noch mit 2.000 Teilen reinem Aceton gewaschen. Das Produkt wird an der Luft getrocknet. Die Produktherstelldaten bzw. Produktdaten gehen aus Tabelle 1 bzw. Tabelle 2 hervor.

### Beispiel 8

### Herstellung einer Hydroxypropyl-Sulfoethyl-Cellulose (HPSEC)

81,1 Teile eines feingemahlenen gebleichten und veredelten Fichtensulfit-Zellstoffes werden in einem Druckreaktor mit einem wandgängigen Flügelrührer in 1.065,8 Teilen tertiär-Butanol suspendiert und der Reaktor mit Stickstoff gespült. 52,57 Teile einer 49,5 gew.-%igen wäßrigen, vinylsulfonsauren Natriumsalz-Lösung werden hinzugegeben und die Mischung 15 Minuten lang gerührt. Dann werden 83,71 Teile Wasser und 59,88 Teile einer 50,1 gew.-%igen Natriumhydroxidlösung aufgedüst und 60 Minuten bei 25°C alkalisiert. 58,1 Teile Propylenoxid werden aufgedüst. Anschließend wird innerhalb von 90 Minuten auf 80°C erwärmt und diese Temperatur 240 Minuten lang gehalten. Mit einer äquimolaren Menge konzentrierter Essigsäure wird heiß neutralisiert, das Produkt ablfiltriert und dreimal mit je 2.000 Teilen einer Mischung aus 8,5 Teilen Methanol und 1,5 Teilen Wasser und schließlich noch mit 2.000 Teilen reinem Methanol gewaschen. Das Produkt wird an der Luft getrocknet. Die Produktherstelldaten gehen aus Tabelle 1, die Produktdaten aus Tabelle 2 hervor.

**Tabelle 1**

| Herstellbedingungen | |
|---|---|
| Beispiele 1- 8 | |
| Erläuterungen Tabelle 1 und 2 | |
| iso-PrOH | Propan-2-ol |
| tert.-BuOH | 2-Methyl-propan-2-ol |
| Fichte | Chemiezellstoff aus gemahlenem, gebleichtem Fichtenzellstoff, Teilchengröße < 0,4 mm |
| Linters | Chemiezellstoff aus gemahlenem, gebleichtem Baumwoll-Linters, Teilchengröße < 0,4 mm |
| VSSNa | Vinylsulfonsaures Natriumsalz |
| NaOH | Natriumhydroxid |
| H₂O | Wasser |
| PO | Propylenoxid |
| N₂ | Die gesamte Reaktion wurde unter Stickstoffatmosphäre durchgeführt |

**Tabelle 2**

| Produktdaten | |
|---|---|
| Beispiele 1 bis 8 | |
| Erläuterungen Tabelle 2 | |
| DS | Durchschnittlicher Substitutionsgrad, Anzahl der Substituenten pro Anhydroglukosebaustein |
| MS | Molarer Substitutionsgrad, Anzahl der Substituentenbausteine pro Anhydroglukosebaustein |
| Ausbeute | Menge des zum Produkt umgesetzten Alkylierungsmittels, Angabe in X des eingesetzten Vinylsulfonsäurenatriums bzw. Propylenoxids |

| Beurteilung der Lösung | |
|---|---|
| Fließverhalten: | |
| sehr gut | glatt fließend |
| gut | weniger glatt fließend |
| befriedigend | nicht glatt fließend |
| schlecht | teilweise vergelt bis gelig |
| ungenügend | Phasentrennung |

| Aussehen der Lösung: | |
|---|---|
| sehr gut | klar |
| gut | leicht trübe |
| befriedigend | trübe |
| mangelhaft | Bodensatz |

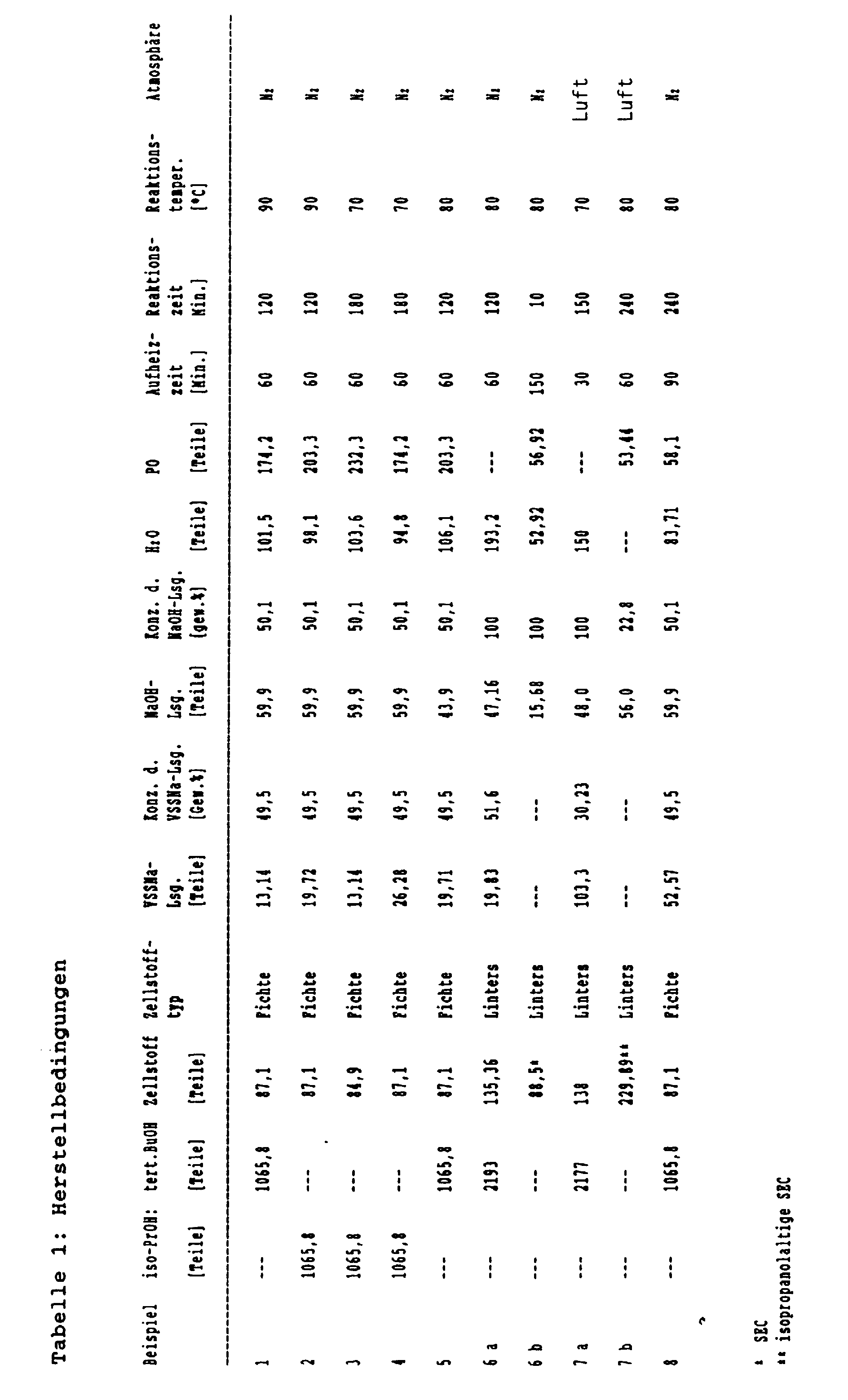

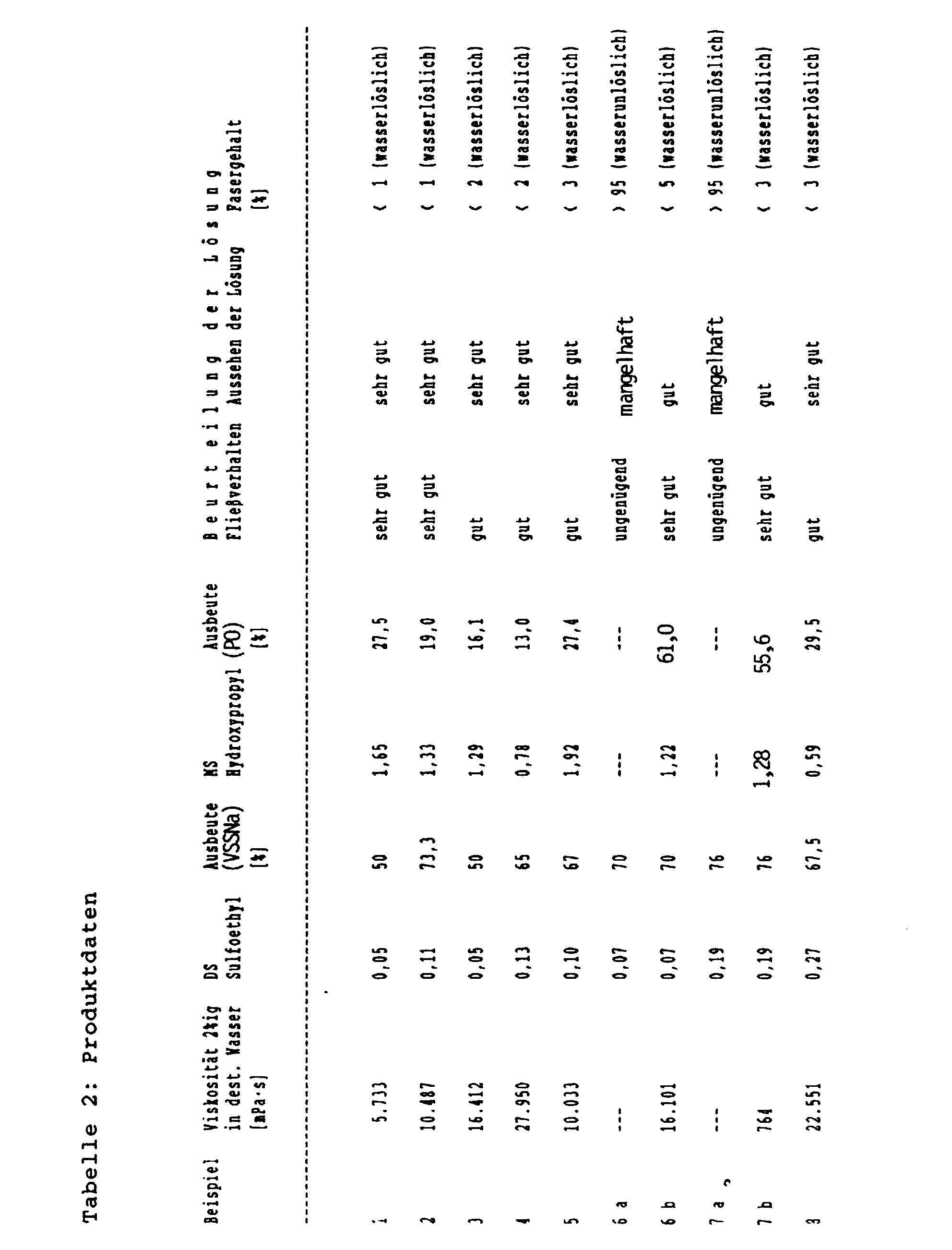

## Patentansprüche

1. Wasserlösliche Hydroxypropyl-Sulfoethyl-Cellulose Derivate mit einem molaren Substitutionsgrad MS mit Hydroxypropylgruppen von weniger als 2, einem durchschnittlichen Substitutionsgrad DS mit Sulfoethylgruppen von weniger als 0,3 sowie ggf. weiterer Substituenten und einer Viskosität von 5 - 80.000 [mPa.s], 2 gew.-%iger wäßriger Lösung bei einem Schergefälle von D = 2,5 sec⁻¹ bei 20°C).

2. Verfahren zur Herstellung von wasserlöslichen Hydroxypropyl-Sulfoethyl-Cellulose Derivate gemäß Anspruch 1, dadurch gekennzeichnet, daß das Verfahren in folgenden Stufen durchgeführt wird:
a) Alkalisierung der Cellulose durch Umsetzung von Cellulose mit Alkali,
b) Veretherung der Alkalicellulose in Anwesenheit einer Base mit einem Sulfoethylierungsmittel und/oder einer Hydroxypropylgruppen-übertragenden Verbindung,
c) gegebenenfalls weitere Veretherung mit mindestens einem Veretherungsmittel, ausgewählt aus Hydroxypropylgruppen übertragender Verbindung und Sulfoethylierungsmittel, das zur Umsetzung mit der Cellulose eine mindestens katalytische Menge an Base benötigt, und
d) gegebenenfalls Neutralisation, Filtration und/oder Auswaschen der im Produkt verbliebenen Salze bzw. der im Reaktor vorliegenden Menge an Base.

3. Verfahren nach Anspruch 2, dadurch gekennzeichnet, daß Propylenoxid und Vinylsulfonsäure bzw. NaVinylsulfonat eingesetzt wird.

4. Verfahren nach einem der Ansprüche 2 oder 3, dadurch gekenzeichnet, daß zusätzlich mit Epoxiden, Alkyl- bzw. Aralkylhalogeniden und/oder 3-Alkoxy-2-hydroxypropylgruppen übertragenden Reagenzien verethert wird.

## Claims

1. Water-soluble hydroxypropyl sulfoethyl cellulose derivatives having a molar degree of substitution MS with hydroxypropyl groups of less than 2 and an average degree of substitution DS with sulfoethyl groups of less than 0.3 and optionally further substituents and a viscosity of 5 to 80000 [mPa·s], as measured on a 2 wt.% aqueous solution at a shear rate D of 2.5 sec⁻¹ at 20°C.

2. A process for the production of water-soluble hydroxypropyl sulfoethyl cellulose derivatives claimed in claim 1, characterised in that it comprises the following steps:
a) alkalisation of the cellulose by reaction of cellulose with alkali,
b) etherification of the alkali cellulose with a sulfoethylating agent and/or a compound which transfers hydroxypropyl groups in the presence of a base,
c) optionally further etherification with at least one etherifying agent, selected from compounds which transfer hydroxypropyl groups and sulfoethylating agents, which requires an at least catalytic quantity of base for reaction with the cellulose and
d) optionally neutralisation, filtration and/or washing out of the salts remaining in the product or the quantity of base present in the reactor.

3. A process as claimed in claim 2, characterised in that propylene oxide and vinylsufonic acid or Na vinylsulfonate is used.

4. A process as claimed in one of claims 2 or 3, characterised in that etherification is additionally performed with epoxides, alkyl or aralkyl halides and/or reagents which transfer 3-alkoxy-3-hydroxypropyl groups.

## Revendications

1. Dérivés d'hydroxypropylsulfo-éthylcellulose solubles dans l'eau ayant un degré de substitution molaire SM avec des groupes hydroxypropyle de valeur inférieure à 2, un degré de substitution DS moyen avec des groupes sulfo-éthyle de valeur inférieure à 0,3 ainsi que, le cas échéant, d'autres substituants, et une viscosité de 5 à 80 000 [mPa.s], mesurée sur une solution aqueuse à 2 % en poids pour un gradient de cisaillement D = 2,5 s⁻¹ à 20°C.

2. Procédé de production de dérivés d'hydroxy-propylsulfo-éthylcellulose solubles dans l'eau suivant la revendication 1, caractérisé en ce qu'il comporte les étapes suivantes :
a) alcalinisation de la cellulose par réaction de la cellulose avec un alcali,
b) éthérification de la cellulose alcalinisée en présence d'une base avec un agent de sulfoéthylation et/ou un composé transférant des groupes hydroxypropyle,
c) le cas échéant, autre éthérification avec au moins un agent d'éthérification, choisi entre des composés transférant des groupes hydroxypropyle et des agents de sulfo-éthylation, qui nécessite pour la réaction avec la cellulose une quantité au moins catalytique de base, et
d) le cas échéant, neutralisation, filtration et/ou élimination par lavage des sels restés dans le produit et de la quantité de base présente dans le réacteur.

3. Procédé suivant la revendication 2, caractérisé en ce qu'on utilise l'oxyde de propylène et l'acide vinylsulfonique ou le vinylsulfonate de sodium.

4. Procédé suivant l'une des revendications 2 ou 3, caractérisé en ce que l'éthérification est effectuée en outre avec des époxydes, des halogénures d'alkyle ou d'aralkyle et/ou des réactifs de transfert de groupes 3-alkoxy-2-hydroxypropyle.
